# EUROPÄISCHE PATENTSCHRIFT

(11) **EP 0 898 156 B1**
(45) Veröffentlichungstag und Bekanntmachung des Hinweises auf die Patenterteilung: **06.10.2004**
(21) Anmeldenummer: 98115316.6
(22) Anmeldetag: 14.08.1998
(51) Int. Cl.: G01G 19/32

(54) **Verwiegeeinrichtung für ein eine oder mehrere Komponenten enthaltendes Aufgabegut**
Weighing device for feeding material containing one or more components
Dispositif de pesage pour l'alimentation de matériaux contenant un ou plusieurs composants

(30) Priorität: 16.08.1997 DE 29714643 U
(43) Veröffentlichungstag der Anmeldung: 24.02.1999
(73) Patentinhaber: Mann + Hummel ProTec GmbH, 71636 Ludwigsburg (DE)
(72) Erfinder: Vollmar, Hartmut, 53773 Hennef-Rott (DE)
(74) Vertreter: Voth, Gerhard, Dipl.-Ing.

(56) Entgegenhaltungen:
- EP-A- 0 595 238
- DE-A- 2 264 466
- DE-U- 9 214 622
- DE-U- 29 714 643
- US-A- 5 148 943

## Beschreibung

Die Erfindung betrifft eine Verwiegeeinrichtung für ein eine oder mehrere Komponenten enthaltendes Aufgabegut, die mit einer der Anzahl der Komponenten entsprechenden Anzahl von Wiegezellen ausgerüstet ist, wobei jede Wiegezelle auf einer Halteplatte befestigt ist und mit einem Wiegetrichter ausgerüstet ist und eine Tragplatte vorgesehen ist, auf der die Halteplatten mit den Wiegezellen befestigbar sind.

Derartige Verwiegeeinrichtungen sind vielfältig bekannt (siehe beispielsweise US-A-5148943 oder DE-U-92 14 622) und werden beispielsweise zur Verwiegung von Rohmaterial für eine Kunststoffverarbeitungsmaschine verwendet.

Hierbei werden entsprechend der Gewichtsanteile der einzelnen Komponenten des Aufgabegutes entsprechend dimensionierte Wiegezellen mit an den jeweiligen Gewichtsanteil der Komponente angepaßten Meßbereich und zugehörige Wiegetrichter entsprechender Größe für jede Komponente vorgesehen, um die Auswiegung je einer Komponente zu bewirken. Die Verwiegeeinrichtung wird in Abhängigkeit von der gewünschten Produktspezifikation mit den benötigten Wiegezellen und Wiegetrichtem entsprechend der Komponenten des Aufgabegutes bestückt.

Die Bestückung der Verwiegeeinrichtung mit Wiegezellen und zugehörigen Wiegetrichtern erfolgt beispielsweise dadurch, daß jede Wiegezelle auf einer Halteplatte angeordnet ist und die Halteplatten mittels Befestigungselementen an einer Tragplatte befestigt werden. Die zugehörigen Wiegetrichter werden frei beweglich von den Wiegezellen gehalten, so daß eine Auswiegung der in den Wiegetrichter eingefüllten Komponente erfolgen kann. Nachteilig bei diesen bekannten Verwiegeeinrichtungen ist es, daß eine anhand einer Produktspezifikation und den jeweiligen Gewichtsanteilen der Komponenten des Aufgabegutes bestückte Verwiegeeinrichtung nur noch mit sehr großem Aufwand an geänderte Produktspezifikationen anpaßbar ist, da die Halteplatten und die Tragplatte entsprechend der Abmessungen der jeweils verwendeten Wiegezellen und Wiegetrichter dimensioniert sind und hinsichtlich ihrer Befestigungselemente individuell gefertigt werden. Nachträgliche Anpassungen bzw. Änderungen der Verwiegeeinrichtung sind daher nur mit sehr großem Aufwand durchführbar. Darüber hinaus verursacht die individuelle Bestückung und Fertigung unterschiedlich aufgebauter Verwiegeeinrichtungen unerwünscht hohe Herstellkosten.

Aufgabe der Erfindung ist es, den Aufbau einer Verwiegeeinrichtung der eingangs erwähnten Art dahingehend zu verbessern, daß eine hohe Flexibilität bei der Bestückung der Verwiegeeinrichtung erreicht wird, so daß sowohl unterschiedliche Aufbauten als auch nachträgliche Änderungen bzw. Anpassungen der Verwiegeeinrichtung an geänderte Produktspezifikationen und Aufgabegüter mit mehr oder weniger Komponenten ermöglicht sind und die Herstellung der Verwiegreeinrichtung bei geringeren Kosten ermöglicht ist.

Diese Aufgabe wird mit einer erfindungsgemäßen Verwiegeeinrichtung gemäß den kennzeichnenden Merkmalen des unabhängigen Patentanspruchs 1 gelöst.

Vorteilhafte Ausgestaltungen der Erfindung sind den abhängigen Ansprüchen entnehmbar.

Zur Lösung der gestellten Aufgabe schlägt die Erfindung vor, daß zum Bestücken der Verwiegeeinrichtung mit unterschiedlichen Wiegezellen ein modulartiger Aufbau dergestalt vorgesehen ist, daß die Halteplatten modulartig untereinander gleich als Halteplattenmodule aufgebaut sind und die Tragplatte modulartig mit untereinander gleich ausgebildeten Befestigungsbereichen für die Halteplattenmodule ausgestattet ist. Bevorzugt weist erfindungsgemäß das Halteplattenmodul im Bereich seines Umfanges mehrere parallel zueinander verlaufende und einseitig offene Einsteckschlitze auf, in die je eine Feststellschraube zur Befestigung der Halteplatte an der Tragplatte einführbar ist.

Auf diese Weise ist es möglich, eine Tragplatte mit stets gleichen Befestigungsbereichen für die Halteplattenmodule zu fertigen, was eine Serienfertigung der Tragplatte mit niedrigen Herstellungskosten ermöglicht. Zur Bestückung der erfindungsgemäßen Verwiegeeinrichtung werden Halteplattenmodule ausgewählt und auf der Tragplatte an deren Befestigungsbereichen befestigt, die mit Wiegezellen und zugehörigen Wiegetrichtern entsprechend der Gewichtsanteile der jeweiligen Komponenten des Aufgabegutes versehen sind. Die Befestigung der Halteplattenmodule erfolgt dabei mittels Feststellschrauben, die in Einsteckschlitze der Halteplattenmodule eingeführt werden, so daß eine besonders einfache und schnelle Bestückung der Tragplatte mit den Halteplattenmodulen und den darauf befindlichen Wiegezellen und Wiegetrichtern ermöglicht ist.

Darüber hinaus ist es einfach und schnell möglich, bei Änderungen des Aufgabegutes oder der Produktspezifikation nach dem Lösen der Feststellschrauben eines oder mehrerer Halteplattenmodule diese mitsamt ihren Wiegezellen und Trichterwaagen von der Tragplatte zu entfernen und durch andere Halteplattenmodule, die den geänderten Anforderungen entsprechen, zu ersetzen.

Um die Flexibilität der Bestückung der erfindungsgemäßen Verwiegeeinrichtung möglichst groß zu gestalten, wird vorgeschlagen, daß jedes Halteplattenmodul jeweils eine Modulplatte gleicher Gestalt und Größe umfaßt und mit einer Wiegezelle mit einem vorgegebenen Meßbereich und einem entsprechenden Wiegetrichter ausgerüstet ist. In diesem Fall kann jedes Halteplattenmodul auf Grund seines identischen Aufbaus an jedem Befestigungsbereich der Tragplatte befestigt werden.

Weiterhin ist es möglich, eine Auswahl Halteplattenmodule mit jeweils unterschiedlichen Wiegezellen und Wiegetrichtern bereitzuhalten und die erfindungsgemäße Verwiegeeinrichtung entsprechend der gerade gewünschten Produktspezifikation hinsichtlich Komponentenanzahl und Gewichtsanteilen am Aufgabegut individuell zu bestücken.

Vorteilhaft ist zwischen jedem Halteplattenmodul und der Tragplatte mindestens ein Schwingungsdämpfer vorgesehen, mittels dessen das Halteplattenmodul von der Tragplatte beabstandet befestigbar ist und eine Entkopplung der Bewegungen von Tragplatte und Halteplattenmodul bewirkbar ist. Durch diese Entkopplung der Bewegungen wird die Meßgenauigkeit der auf den Halteplattenmodulen befindlichen Wiegezellen der erfindungsgemäßen Verwiegeeinrichtung gesteigert.

Eine vorteilhafte Ausführungsform der Erfindung sieht vor, daß die Grundplatte einen mehreckigen, mindestens dreieckigen Umfang aufweist und ausgehend von jeder Umfangsseite ein gleich ausgebildeter Befestigungsbereich auf der Tragplatte vorgesehen ist sowie Befestigungselemente zur Befestigung von Halteplattenmodulen vorgesehen sind. Beispielsweise kann die Grundplatte einen achteckigen Umfang mit gleich langen Umfangsseiten aufweisen, wobei im Bereich der Umfangsseiten Befestigungselemente für die Befestigung je eines Halteplattenmoduls vorgesehen sind.

Die Tragplatte der erfindungsgemäßen Verwiegeeinrichtung kann darüber hinaus auch in ihrem mittleren Bereich eine Durchgangsbohrung für einen Auslauf eines Wiegetrichters aufweisen, wobei der Durchgangsbohrung zugeordnet Befestigungselemente für die Befestigung an der Halteplatte der Tragplatte vorgesehen sind. Auf dieser Halteplatte ist bevorzugt eine Wiegezelle mit zugehörigem Wiegetrichter für die Hauptkomponente, d.h. die Komponente mit dem größten Gewichtsanteil am Aufgabegut, vorgesehen. Durch Ausbildung der Tragplatte, wie vorangehend erläutert als gleichzeitiges Achteck können auf diese Weise rings um die im mittleren Bereich angeordnete Halteplatte mit Wiegezelle und Wiegetrichter für die Hauptkomponente noch bis zu acht Halteplattenmodule mit Wiegezellen und Wiegetrichtern für Nebenkomponenten im Bereich je einer Umfangsseite der Tragplatte der erfindungsgemäßen Vorrichtung befestigt werden.

Um den Platzbedarf der erfindungsgemäßen Halteplattenmodule möglichst gering zu halten, wird vorgeschlagen, daß die Halteplattenmodule einen Umfang eines symmetrischen Trapezes aufweisen und die längere Trapezseite bei Befestigung des Halteplattenmoduls auf der Tragplatte mit deren Umfangsseite fluchtet.

Zur weiteren Steigerung der Flexibilität der erfindungsgemäßen Verwiegeeinrichtung wird vorgeschlagen, daß auf den Haltemodulen Wiegezellen befestigt werden, die mit Meßleitungen für die Wiegesignale ausgerüstet sind und eine Auswerteeinheit mit einem gemeinsamen Datenbus für den Anschluß der Meßleitungen der Wiegezellen vorgesehen ist. Bei der Bestückung der erfindungsgemäßen Verwiegeeinrichtung werden die Meßleitungen der einzelnen Wiegezellen einfach mit dem gemeinsamen Datenbus verbunden, so daß die Auswerteeinheit Zugriff auf die Wiegesignale jeder einzelnen Wiegezelle erhält. Durch entsprechende Steuerung der Auswerteeinheit, beispielsweise in Gestalt einer geeigneten Software kann darüber hinaus ein selbsttätiges Erkennen der jeweiligen an den gemeinsamen Datenbus angeschlossenen Wiegezelle mit ihrem Haltemodul auf der Tragplatte mit ihrem zugehörigen Meßbereich erreicht werden.

Die Erfindung wird nachfolgend anhand eines Ausführungsbeispieles in der Zeichnung näher erläutert. Es zeigen
- Fig. 1: eine Seitenansicht einer erfindungsgemäßen Verwiegeeinrichtung
- Fig. 2: eine Aufsicht auf die Tragplatte der erfindungsgemäßen Verwiegeeinrichtung mit daran befestigten Halteplattenmodulen
- Fig. 3a: die Einzelheit X gemäß Fig. 1 in vergrößerter Darstellung und teilweise entlang der Linie S in Fig. 3b geschnitten
- Fig. 3b: die Aufsicht auf das Halteplattenmodul gemäß Fig. 3a.

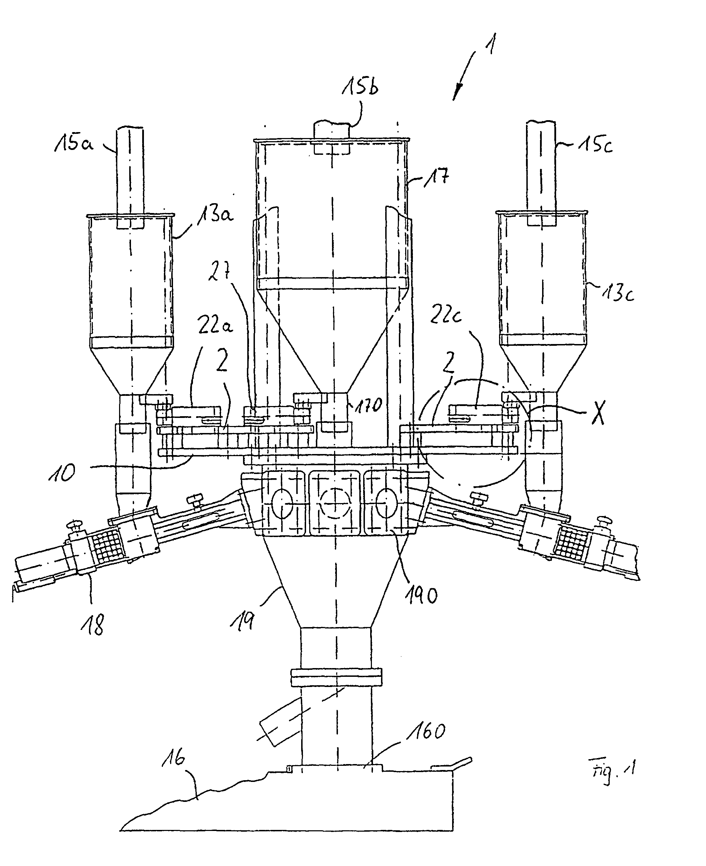

Eine erfindungsgemäße Verwiegeeinrichtung 1, beispielsweise für eine Kunststoffverarbeitungsmaschine 16 ist in der Fig. 1 in der Seitenansicht dargestellt. Die hier dargestellte Verwiegeeinrichtung 1 ist für ein drei Komponenten enthaltendes Aufgabegut bestimmt, wobei jede Komponente von oben durch je einen Zufuhrstutzen 15a, 15b, 15c jeweils einem Wiegetrichter 13a, 17, 13c mit einer zugehörigen Wiegezelle 22a, 27, 22c zugeführt wird. Die Wiegezellen 22a, 27, 22c und zugehörigen Wiegetrichter 13a, 13c, 17 sind entsprechend des Gewichtsanteiles der jeweiligen Komponente am Aufgabegut hinsichtlich ihres Meßbereiches bzw. Fassungsvolumens dimensioniert.

Jede Wiegezelle 22a, 22c, 27 mit ihrem zugehörigen Wiegetrichter 13a, 13c, 17 ist jeweils auf einer Halteplatte 2 befestigt und die Halteplatten 2 sind auf einer gemeinsamen Tragplatte 10 an dafür vorgesehenen Befestigungsbereichen der Tragplatte 10 befestigt, so daß die Wiegezellen 22a, 22c, 27 eine Auswiegung der jeweils in die zugehörigen Wiegetrichter 13a, 13c, 17 eingefüllten Komponente entsprechend dem Gewichtsanteil des gewünschten Aufgabegutes vornehmen können.

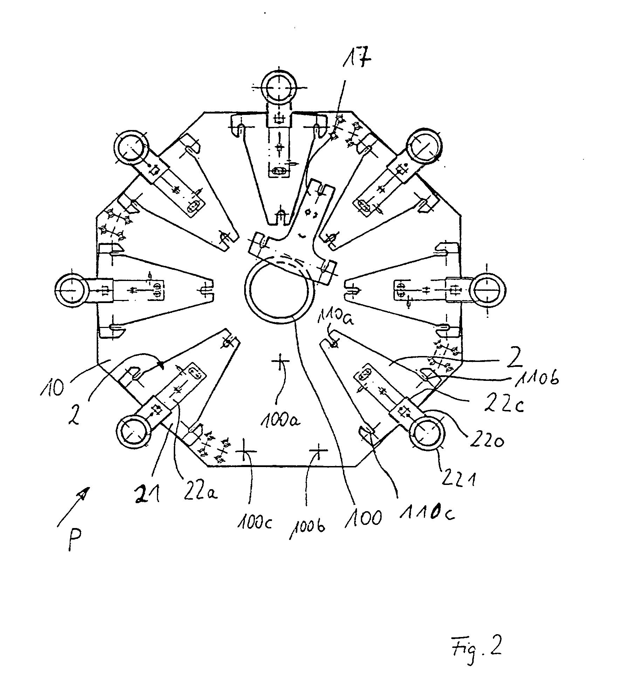

Um eine rationelle Fertigung, Bestückung und Austausch bzw. Änderungen von Wiegezellen vornehmen zu können, ist ein modulartiger Aufbau der Tragplatte 10 und der hierauf zu befestigenden Halteplatten 2 vorgesehen, wie er schematisch in der Fig. 2 als einem Ausführungsbeispiel dargestellt ist. Hierbei ist eine Tragplatte 10 in Gestalt eines Mehreckes mit gleich langen Seiten vorgesehen, wobei von jeder Seite ausgehend ein Befestigungsbereich für eine als Halteplattenmodul ausgebildete Halteplatte vorgesehen ist, wobei diese Halteplattenmodule alle untereinander gleich sind. Lediglich die dem Mittelbereich oder Zentralbereich der Tragplatte zugeordnete Halteplatte für eine Wiegezelle ist üblicherweise in der Grundfläche verschieden gestaltet von den am Umfang der Tragplatte angeordneten Halteplattenmodulen.

Wie der Fig. 2 entnehmbar ist, weist die hier vorgeschlagene Tragplatte 10 einen Umfang eines gleichzeitigen Achtecks auf, wobei jeder Umfangsseite zugeordnet je ein gleichartig ausgebildeter Befestigungsbereich für ein Halteplattenmodul 2 vorgesehen ist. Dazu weist jeder Befestigungsbereich der Tragplatte 10 drei Gewindebohrungen 100a, 100b, 100c für die Aufnahme von Feststellschrauben 110a, 110b, 110 c auf. Der Abstand und die Ausrichtung der Bohrungen 100a, b, c in der Tragplatte 10 ist dabei modulartig jeder Umfangsseite der Tragplatte 10 zugeordnet gleich ausgebildet, so daß insgesamt acht ebenfalls untereinander gleich ausgebildete Halteplattenmodule 2 an der Tragplatte 10 auf den acht Befestigungsbereichen befestigt werden können, ausgehend von jeder der acht Umfangsseiten. Des weiteren kann noch eine weitere Halteplatte in der Mitte der Tragplatte befestigt werden.

Es ist somit einfach möglich, die Verwiegeeinrichtung 1 gemäß Fig. 1 mit Wiegezellen und zugehörigen Wiegetrichtern gemäß den Gewichtsanteilen der jeweiligen Komponenten am Aufgabegut zu bestücken. Dazu werden Halteplattenmodule 2 mit Wiegezellen 22a, 22c eines gewünschten Meßbereiches und ihre zugehörigen Wiegetrichter an den Befestigungsbereichen der Tragplatte 10 durch Aufschieben in Pfeilrichtung P und nachfolgendes Anziehen der Feststellschrauben 110a, 110b, 110c befestigt, was einfach und schnell durchführbar ist.

Weiterhin weist die Tragplatte in ihrem mittleren Bereich eine Durchgangsbohrung 100 auf und der Durchgangsbohrung 100 zugeordnet sind Befestigungselemente für die Befestigung einer mit einer von den Halteplattenmodulen abweichenden Gestalt ausgebildeten Halteplatte 17 an der Tragplatte 10 vorgesehen. Auf dieser Halteplatte 17 wird vorzugsweise die Wiegezelle 27 mit ihrem zugehörigen Wiegetrichter 17 befestigt, der das größte Fassungsvolumen aller verwendeten Wiegetrichter aufweist und daher vorzugsweise der Hauptkomponente, d.h. der Komponente mit dem größten Gewichtsanteil des Aufgabegutes zugeordnet ist.

Durch diese Durchgangsbohrung 100 kann sodann die Zuführung der Hauptkomponente auf direktem Wege in den unterhalb der Tragplatte 10 befindlichen Sammeltrichter 19 und von dort über die Einfüllöffnung 160 in die Verarbeitungsmaschine, beispielsweise Kunststoffverarbeitungsmaschine 16 erfolgen.

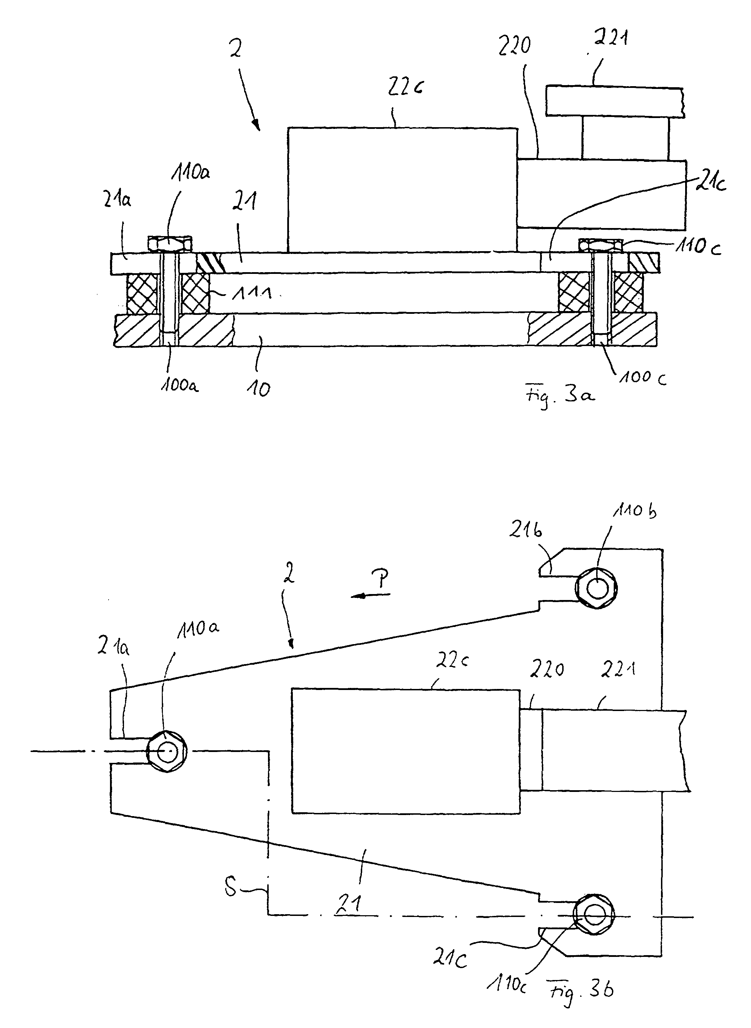

Der Aufbau eines Halteplattenmoduls 2 nach Fig. 2 ist in den Fig. 3a, b dargestellt.

Wie diesen Fig. 3a und 3b entnehmbar, ist die Wiegezelle 22c auf einer Modulplatte 21 befestigt, beispielsweise aufgeschraubt oder aufgeklebt und bildet gemeinsam mit dem hier nicht dargestellten über den Wiegearm 220 und den Haltering 221 gehalterten zugehörigen Wiegetrichter das Halteplattenmodul 2. Dieses Halteplattenmodul 2 wird an der Tragplatte 10 befestigt. Dazu weist die Modulplatte 21 des Halteplattenmoduls 2 etwa den Umfang eines gleichzeitigen Trapezes auf und im Bereich des Umfanges der Modulplatte 21 des Halteplattenmoduls 2 sind mehrere, hier drei zueinander parallel verlaufende und einseitig offene Einsteckschlitze 21a, 21b, 21c vorgesehen.

Die Befestigung der Halteplattenmodule 2 an der Tragplatte 10 erfolgt nun dadurch, daß das Halteplattenmodul 2 mit seiner Modulplatte 21 in Pfeilrichtung P mit den Einsteckschlitzen 21a, 21b, 21c auf die Feststellschrauben 110a, 110b, 110c, die in Gewindebohrungen 100a, 100b, 100c der Tragplatte 10 lose eingeschraubt sind, aufgeschoben wird, so daß die Feststellschrauben 110a, 110b, 110c in die Einsteckschlitze 21a, 21b, 21c in der in der Fig. 3b dargestellten Weise eingeführt werden. Durch Anziehen der Feststellschrauben 100a, 100b, 100c wird eine feste Verbindung zwischen Halteplattenmodul 2 und Tragplatte 10 hergestellt. Zusätzlich kann, wie in Fig. 3a dargestellt, im Bereich jeder Feststellschraube 100a, 100b, 100c ein Schwingungsdämpfer 111 vorgesehen sein, der zwischen der Tragplatte 10 und der Modulplatte 21 des Halteplattenmoduls 2 angeordnet ist und diese voneinander beabstandet, wobei eine Entkopplung der Bewegungen von Tragplatte 10 und Halteplattenmodul 2 bewirkt wird, was der Meßgenauigkeit der Wiegezelle 22c förderlich ist.

Zur Bestückung der Verwiegeeinrichtung 1 mit in den vorangehend erläuterten Halteplattenmodulen 2 integrierten Wiegezellen und Wiegetrichtern weist die Tragplatte 10 den in der Fig. 2 dargestellten Aufbau auf, bei der zum besseren Verständnis die Wiegetrichter nicht eingezeichnet sind.

Die Modulplatten 21 der Halteplattenmodule 2 sind im Bereich der Umfangsseiten der Tragplatte 10 so an dieser befestigt, daß die Modulplatte 21 mit ihrer längeren Grundseite mit der Umfangsseite der Tragplatte 10 fluchten. Der Tragring 221 der Wiegezellen für den zugehörigen Wiegetrichter steht dabei über den Umfang der Tragplatte 10 hervor. Die in den Wiegetrichtern 13a, 13c der Halteplattenmodule 2 abgewogenen Komponenten können somit seitlich an der Tragplatte 10 vorbeigeführt in unterhalb der Tragplatte 10 am Sammeltrichter 19 im Bereich von Anschlußflächen 190 befestigte Dosierschnecken 18 zugeführt werden. Diese Dosierschnecken 18 ermöglichen dann in bekannter Weise eine exakte Dosierung der Komponenten in den Sammeltrichter 19, so daß die in den Fig. 1 und 2 dargestellte Vorrichtung für die Zudosierung von insgesamt neun Komponenten, einer Hauptkomponente über die Durchgangsbohrung 100 und acht Nebenkomponenten über Halteplattenmodule 2 und Dosierschnecken 18, geeignet ist.

Wesentlich für die Schaffung einer flexiblen und preiswert herzustellenden Verwiegeeinrichtung ist es, daß die Tragplatte 10 stets mit dem gleichen Bohrbild mit Bohrungen 100a, 100b, 100c im Bereich jeder Umfangsseite ausgebildet werden kann. Entsprechend der Produktspezifikation, der Gewichtsanteile und der Anzahl der Komponenten des Aufgabegutes sind Halteplattenmodule 2 mit Wiegezellen 22a, 22c geeigneten Meßbereiches und zugehörigen Wiegetrichtern nach Art eines Modulsystems an der Tragplatte 10 in der geschilderten weise befestigt.

Somit wird nicht nur die erstmalige Bestückung der Verwiegeeinrichtung gemäß der vorliegenden Produktspezifikation erheblich vereinfacht, es ist darüber hinaus auch möglich, bei sich ändernder Produktspezifikation, Anzahl der Komponenten, Änderung der Gewichtsanteile eine schnelle Umrüstung der Verwiegeeinrichtung durch Austausch einzelner oder mehrerer Halteplattenmodule 2 bzw. Hinzufügen oder Entfernen von Halteplattenmodulen 2 schnell und einfach zu bewirken.

Um diese hohe Flexibilität der dargestellten Verwiegeeinrichtung weiter zu steigern, wird vorteilhaft für die Wiegezellen eine Auswerteeinheit mit einem gemeinsamen Datenbus verwendet, an den die Meßleitungen der Wiegezellen für die Wiegesignale angeschlossen werden können, was die Bestückungs- und Umrüstzeiten der Verwiegeeinrichtung niedrig hält.

Die vorangehend erläuterte Verwiegeeinrichtung ermöglicht somit nach Art eines Modulsystems eine Bestückung mit Wiegezellen und zugehörigen Wiegetrichtern, die stets , an die gewünschten Gewichtsanteile des Aufgabegutes und die Produktspezifikation auf einfache Weise angepaßt werden kann.

## Patentansprüche

1. Verwiegeeinrichtung für ein eine oder mehrere Komponenten enthaltendes Aufgabegut, die mit einer der Anzahl der Komponenten entsprechenden Anzahl von Wiegezellen (22) ausgerüstet ist, wobei jede Wiegezelle (22) auf einer Halteplatte (2) befestigt ist und mit einem Wiegetrichter (13) ausgerüstet ist und eine Tragplatte (10) vorgesehen ist, auf der die Halteplatten (2) mit den Wiegezellen (22) befestigbar sind, **dadurch gekennzeichnet, daß** zum Bestücken der Verwiegeeinrichtung mit unterschiedlichen Wiegezellen (22) die Halteplatten (2) modulartig untereinander gleich als Halteplattenmodule (2) aufgebaut sind und die Tragplatte (16) modulartig mit mehreren untereinander gleich ausgebildeten Befestigungsbereichen (100a, 100b, 100c) für die Halteplattenmodule (2) ausgestattet ist.

2. Verwiegeeinrichtung nach Anspruch 1, **dadurch gekennzeichnet, daß** das Halteplattenmodul (2) im Bereich seines Umfanges mehrere parallel zueinander verlaufende und einseitig offene Einsteckschlitze (21a, 21b, 21c) aufweist, in die je eine Feststellschraube (110a, 110b, 110c) zur Befestigung der Halteplatte (2) an der Tragplatte (10) einführbar ist.

3. Verwiegeeinrichtung nach einem der Ansprüche 1 oder 2, **dadurch gekennzeichnet, daß** zwischen jedem Halteplattenmodul (2) und der Tragplatte (10) mindestens ein Schwingungsdämpfer (111) vorgesehen ist, mittels dessen das Halteplattenmodul (2) von der Tragplatte (10) beabstandet befestigbar ist und einen Entkopplung der Bewegungen von Tragplatte (10) und Halteplattenmodul (2) bewirkbar ist.

4. Verwiegeeinrichtung nach einem der Ansprüche 1 bis 3, **dadurch gekennzeichnet, daß** die Tragplatte (10) einen mehreckigen, mindestens dreieckigen Umfang aufweist und ausgehend von jeder Umfangsseite ein gleich ausgebildeter Befestigungsbereich (100a, 100b, 100c) auf der Tragplatte vorgesehen ist sowie Befestigungselemente (110a, 110b, 110c) zur Befestigung der Halteplattenmodule (2) vorgesehen sind.

5. Verwiegeeinrichtung nach Anspruch 4, **dadurch gekennzeichnet, daß** die Tragplatte (10) einen achteckigen Umfang mit gleich langen Umfangsseiten aufweist und im Bereich der Umfangsseiten Befestigungselemente (100a, 100b, 100c) für die Befestigung je eines Halteplattenmodules (2) vorgesehen sind.

6. Verwiegeeinrichtung nach einem der Ansprüche 1 bis 5, **dadurch gekennzeichnet, daß** die Tragplatte (10) in ihrem mittleren Bereich eine Durchgangsbohrung (100) für einen Auslauf eines Wiegetrichters (17) aufweist und der Durchgangsbohrung (100) zugeordnet Befestigungselemente für die Befestigung einer Halteplatte (2) an der Tragplatte (10) vorgesehen sind.

7. Verwiegeeinrichtung nach einem der Ansprüche 1 bis 6, **dadurch gekennzeichnet, daß** die Modulplatten der Halteplattenmodule (2) einen Umfang in Form eines symmetrischen Trapezes aufweisen und die längere Trapezseite bei Befestigung des Halteplattenmoduls (2) auf der Tragplatte (10) mit deren Umfangsseite fluchtet.

8. Verwiegeeinrichtung nach einem der Ansprüche 1 bis 7, **dadurch gekennzeichnet, daß** die Halteplattenmodule (2) mit Wiegezellen (22) mit Meßleitungen für die Wiegesignale ausgerüstet sind und eine Auswerteeinheit mit einem gemeinsamen Datenbus für den Anschluß der Meßleitungen der Wiegezellen (22) vorgesehen ist.

## Claims

1. Weighing device for a discharging material containing one or more components, said weighing device being provided with a number of weighing cells (22) which corresponds to the number of components, each weighing cell (22) being secured on a mounting plate (2) and being provided with a weighing hopper (13), and a carrier plate (10) is provided on which the mounting plates (2) with the weighing cells (22) are securable, **characterised in that** for providing the weighing device with variable weighing cells (22) the mounting plates (2) are each configured in a modular-like manner in the form of carrier plate modules (2) so as to be identical with each other and the carrier plate (10) is provided in a modular-like manner with a plurality of securing regions (100a, 100b, 100c) for the mounting plate module (2), said securing regions (100a, 100b, 100c) being identical with each other.

2. Weighing device according to claim 1, **characterised in that** the mounting plate module (2) in the region of its periphery has a plurality of slots (21a, 21b, 21c), which extend parallel to each other, are open on one side and into each of which a locking screw (110a, 110b, 110c) is insertable for securing the mounting plate (2) on the carrier plate (10).

3. Weighing device according to one of claims 1 or 2, **characterised in that** between each mounting plate module (2) and the carrier plate (10) at least one vibration damper (111) is provided, by means of which the mounting plate module (2) is securable at a distance from the carrier plate (10) and a decoupling of the movements of carrier plate (10) and mounting plate module (2) is effectable.

4. Weighing device according to one of claims 1 to 3, **characterised in that** the carrier plate (10) has a multi-cornered, at least three-cornered periphery and proceeding from each peripheral side an identically configured securing region (100a, 100b, 100c) is provided on the carrier plate and securing members (110a, 110b, 110c) are provided for securing the mounting plate module (2).

5. Weighing device according to claim 4, **characterised in that** the carrier plate (10) has an eight-cornered periphery with identically long peripheral sides and in the region of the peripheral sides securing members (100a, 100b, 100c) are provided for the securing of each of the mounting plate modules (2).

6. Weighing device according to one of claims 1 to 5, **characterised in that** the carrier plate (10) in its central region has a through-bore (100) for an outlet of a weighing hopper (17), and securing members, associated with the through-bore (100), are provided for the securing of a mounting plate (2) to the carrier plate (10).

7. Weighing device according to one of claims 1 to 6, **characterised in that** the modular plates of the mounting plate module (2) have a periphery in the form of a symmetrical trapezium and, when the mounting plate module is secured on the carrier plate (10), the longer side of the trapezium is in alignment with the peripheral side of said carrier plate (10).

8. Weighing device according to one of claims 1 to 7, **characterised in that** the mounting plate modules (2) with weighing cells (22) are provided with measuring lines for the weighing signals, and an evaluation unit with a common data bus is provided for the connection of the measuring lines of the weighing cells (22).

## Revendications

1. Dispositif de pesée, pour un matériau chargé contenant un ou plusieurs composants, équipé d'un nombre de cellules de pesée (22) correspondant au nombre des composants, chaque cellule de pesée (22) étant fixée sur une plaque de support (2), et d'une trémie de pesée (13), de plus il est prévu une plaque de base (10) sur laquelle les plaques de support (2) munies des cellules de pesée (22) peuvent être fixées,
**caractérisé en ce que**
pour équiper le dispositif de pesée de différentes cellules de pesée (22), les plaques de support (2) sont construites de façon identique dans un mode modulaire, sous la forme de modules de plaques de support (2), et la plaque de base (16) est garnie, dans un mode modulaire, de plusieurs zones de fixation (100a, 100b, 100c) pour les modules de plaques de support (2) qui sont entre elles de même constitution.

2. Dispositif de pesée selon la revendication 1,
**caractérisé en ce que**
le module de plaque de support (2) présente dans la région de sa périphérie plusieurs fentes d'insertion (21a, 21b, 21c) s'étendant parallèlement entre elles et ouvertes d'un côté, dans chacune desquelles peut être engagée une vis de blocage (110a, 110b, 110c) servant à fixer la plaque de support (2) à la plaque de base (10).

3. Dispositif de pesée selon une des revendications 1 ou 2,
**caractérisé en ce qu'**
il est prévu entre chaque module de plaque de support (2) et la plaque de base (10) au moins un amortisseur de vibrations (111) au moyen duquel le module de plaque de support (2) peut être fixé à un certain écartement de la plaque de base (10) et au moyen duquel on peut réaliser un découplage des mouvements de la plaque de base (10) et du module de plaque de support (2).

4. Dispositif de pesée selon une des revendications 1 à 3,
**caractérisé en ce que**
la plaque de base (10) présente une périphérie polygonale, au moins triangulaire, et, sur la plaque de base sont prévues des régions de fixation de même constitution (100a, 100b, 100c), dont chacune part d'un côté de la périphérie, ainsi que des éléments de fixation (110a, 110b, 110c) pour la fixation des modules de plaques de support (2).

5. Dispositif de pesée selon la revendication 4,
**caractérisé en ce que**
la plaque de base (10) présente une périphérie octogonale à côtés de même longueur et des éléments de fixation (100a, 100b, 100e) sont prévus, dans la région de chacun des côtés de la périphérie pour fixer un module de plaque de support (2).

6. Dispositif de pesée selon une des revendications 1 à 5,
**caractérisé en ce que**
la plaque de base (10) présente dans sa région centrale un perçage traversant (100) pour une sortie d'une trémie de pesée (17) et des éléments de fixation associés au perçage traversant (100) sont prévus pour fixer une plaque de support (2) à la plaque de base (10).

7. Dispositif de pesée selon une des revendications 1 à 6,
**caractérisé en ce que**
les plaques des modules de plaques de support (2) présentent une périphérie ayant la forme d'un trapèze symétrique et, lorsque le module de plaque de support (2) est fixé sur la plaque de base (10), le grand côté du trapèze est aligné avec le côté de la périphérie de cette plaque.

8. Dispositif de pesée selon une des revendications 1 à 7,
**caractérisé en ce que**
les modules de plaques de support (2) sont équipés de cellules de pesée (22) munis de conducteurs de mesure pour les signaux de pesée et il est prévu une unité d'analyse munie d'un bus de données commun pour la connexion des conducteurs de mesure des cellules de pesée (22).
